(19) Europäisches Patentamt

European Patent Office

Office européen des brevets

(11) **EP 1 016 162 B1**

(12) **FASCICULE DE BREVET EUROPEEN**

(45) Date de publication et mention
de la délivrance du brevet:
**11.12.2002 Bulletin 2002/50**

(51) Int Cl.⁷: **H01Q 3/26**, H01Q 21/20,
H04B 7/08, H04Q 7/36

(21) Numéro de dépôt: **98925775.3**

(22) Date de dépôt: **25.05.1998**

(86) Numéro de dépôt international:
**PCT/FR98/01037**

(87) Numéro de publication internationale:
**WO 98/054786 (03.12.1998 Gazette 1998/48)**

(54) **PROCEDE DE COMMUNICATION ENTRE UNE STATION DE BASE A N ANTENNES ET UN MOBILE ET STATION DE BASE PERMETTANT DE METTRE EN OEUVRE CE PROCEDE**

VERFAHREN ZUR KOMMUNIKATION ZWISCHEN EINER BASISSTATION MIT N-ANTENNEN UND EINEM MOBILEN TELEFON UND BASISSTATION ZUR DURCHFÜHRUNG DES VERFAHRENS

COMMUNICATION METHOD BETWEEN A BASE STATION WITH N ANTENNAE AND A MOBILE PHONE AND BASE STATION FOR IMPLEMENTING SAME

(84) Etats contractants désignés:
**DE ES FI FR GB IT SE**

(30) Priorité: **28.05.1997 FR 9706535**

(43) Date de publication de la demande:
**05.07.2000 Bulletin 2000/27**

(73) Titulaire: **FRANCE TELECOM exploitant public
75015 Paris (FR)**

(72) Inventeur: **LEVY, Armand
F-75012 Paris (FR)**

(74) Mandataire: **Fréchède, Michel
Cabinet Plasseraud
84, rue d'Amsterdam
F-75009 Paris (FR)**

(56) Documents cités:
**EP-A- 0 591 770          EP-A- 0 595 247
WO-A-91/07019          US-A- 4 704 734
US-A- 5 303 240          US-A- 5 740 526**

• **REUDINK D O ET AL: "DIRECTIVE ANTENNAS
OFFER IMPROVEMENTS FOR CELL SITES"
MOBILE RADIO TECHNOLOGY, vol. 14, no. 5, 1
mai 1996, page 10, 12, 14, 16, 18, 20 XP000595491**

## Description

La présente invention concerne un procédé de communication radio en haute fréquence entre une station de base à N antennes et un mobile, ainsi qu'une station de base permettant de mettre en oeuvre ce procédé.

Elle trouve application aux systèmes de téléphonie cellulaire numérique, où une même station dotée d'un réseau d'antennes permet de desservir plusieurs mobiles dans une cellule.

Dans une telle station, en émission, on synthétise les signaux à appliquer à chaque antenne à partir du signal destiné à parvenir au mobile.

Pour cela, dans la chaîne d'émission de chaque antenne, des procédés numériques produisent généralement des échantillons représentant ces signaux. Puis, par conversion numérique-analogique et modulation à la fréquence porteuse, on synthétise chaque signal, qui est ensuite amplifié et appliqué à l'antenne appropriée du réseau.

La complexité des calculs nécessaires pour synthétiser les échantillons, ainsi que le coût des circuits de conversion numérique-analogique et de modulation, croissent avec le nombre d'antennes du réseau.

Dans la suite, on appellera dispositif d'émission multicapteur l'ensemble des circuits qui produisent les signaux appliqués à chaque antenne élémentaire pour émission vers le mobile.

En réception, de façon analogue, la chaîne de réception de chaque antenne amène les signaux reçus par cette antenne en fréquence intermédiaire ou en bande de base. Les signaux sont ensuite échantillonnés et subissent une conversion analogique-numérique. Puis les échantillons sont traités par des procédés numériques pour extraire l'information transmise par le mobile.

La complexité et le coût des circuits des voies de réception augmentent là encore avec le nombre d'antennes du réseau.

Dans la suite, on appellera dispositif de réception multicapteur l'ensemble des circuits qui traitent les signaux reçus en provenance du mobile pour extraire l'information transmise.

Le réseau d'antennes peut présenter toute géométrie jugée appropriée. En particulier, les antennes peuvent être disposées en ligne et régulièrement espacées. Dans ce cas, elles sont de préférence directives et leurs lobes pointent dans la direction orthogonale à la droite sur laquelle les antennes sont alignées.

Les antennes peuvent également être disposées sur un cercle et régulièrement espacées. Dans ce cas, les antennes sont également de préférence directives et leurs lobes pointent dans la direction radiale vers l'extérieur du cercle sur lequel elles sont disposées.

La présente invention s'applique également à un réseau d'antennes présentant une géométrie en polygone régulier tel qu'un triangle équilatéral, un carré, un pentagone, un hexagone, etc., avec des antennes régulièrement espacées sur ses côtés.

De l'état de la technique on connaît différents réseaux d'antennes, utilisés pour traiter le problème de la diversité.

Le document D1 : WO-A-91/07019 décrit un procédé mettant en oeuvre le principe de macro-diversité. Dans ce document, les sous-ensembles d'antennes susceptibles d'être sélectionnés sont configurés préalablement, de façon directionnelle, suivant une forme de sectorisation, pour chaque station, de façon à assurer le hand-over avec la meilleure puissance reçue.

En outre, selon le document précité, on sélectionne un sous-ensemble de trois antennes dont les rôles ne sont pas équivalents, une en émission et une paire en réception, pour assurer la diversité de façon classique. Ce sous-ensemble de une plus deux antennes détermine un secteur angulaire.

Le document D2 : EP-A-0591 770 décrit un processus de sélection d'un secteur, l'antenne étant sectorisée et donc parallèlement configurée dans le réseau. Le secteur comprend trois antennes, une en émission et deux en réception, de part et d'autres de l'antenne en émission. La moyenne des signaux effectuée concerne la moyenne dans le temps des puissances reçues par les deux antennes en réception.

La présente invention a pour objectif de réduire la complexité de calcul et le coût des traitements effectués par une station de base dotée d'un réseau d'antennes.

Afin d'atteindre cet objectif, la présente invention propose un procédé de communication entre une station de base comportant un réseau de N antennes distinctes, N étant un entier supérieur à 1, et au moins un mobile, caractérisé en ce que :

(a) on estime les directions d'arrivée et les puissances des trajets radioélectriques à la station de base :

(b) on détermine, pour ce mobile, une direction d'arrivée principale desdits trajets radioélectriques à la station de base ;

(c) on sélectionne M antennes, M étant un entier strictement supérieur à 1 et inférieur à N, dont les lobes individuels de réception et les lobes individuels d'émission ont des directions contenues dans un secteur angulaire centré sur la direction d'arrivée principale ;

(d) on traite uniquement les signaux reçus par les M antennes sélectionnées en provenance du mobile et on synthétise uniquement les signaux à émettre par les M antennes sélectionnées.

La présente invention propose également une station de base de radiocommunication avec des mobiles, comportant un réseau de N antennes distinctes, N étant un entier supérieur à 1, et K chaînes de réception ou d'émission, K étant un entier inférieur à NxL, où L est le nombre de communications simultanées, caractérisée en ce qu'elle comprend :

des moyens d'estimation des directions d'arrivée et des puissances des trajets radioélectriques à la station de base ;

des moyens pour déterminer, pour un mobile donné, une direction d'arrivée principale des trajets radioélectriques à la station de base ;

des moyens de sélection de M antennes, M étant un entier strictement supérieur à 1 et inférieur à N, dont les lobes individuels de réception ou d'émission ont des directions contenues dans un secteur angulaire centré sur la direction d'arrivée principale ;

des moyens de commutation affectant, pour chaque communication, M chaînes de réception ou d'émission aux M antennes précédemment sélectionnées.

Dans un mode particulier de réalisation, la direction principale mentionnée précédemment est la direction d'arrivée pour laquelle la puissance radioélectrique reçue, ou émise et parvenant au mobile (selon qu'on se place en réception ou en émission), est la plus grande.

Dans un autre mode particulier de réalisation, la direction principale mentionnée précédemment est le barycentre r des directions d'arrivée des différents trajets radioélectriques, défini comme suit :

$$ r = \left( \sum_{i=1}^{J} p_i \cdot a_i \right) \Big/ \left( \sum_{i=1}^{J} p_i \right) $$

où i est un entier,
où J est le nombre de trajets radioélectriques identifiés,
où $a_i$ est l'angle formé par le $i^{\text{ème}}$ trajet radioélectrique par rapport à la direction du trajet ayant la plus grande puissance radioélectrique, et
où $p_i$ est la puissance radioélectrique du $i^{\text{ème}}$ trajet.

D'autres caractéristiques et avantages de la présente invention resscrtiront clairement de la description détaillée suivante de modes particuliers de réalisation, donnés à titre d'exemples non limitatifs. La description se réfère aux dessins qui l'accompagnent, dans lesquels :

- la figure 1 représente schématiquement des dispositifs classiques de réception et d'émission multicapteurs, dans le cas où on considère une communication unique entre la station de base et un mobile ;
- la figure 2 représente schématiquement des dispositifs de réception et d'émission compris dans une station de base conforme à un mode particulier de réalisation de la présente invention, dans le cas où on considère une communication unique entre la station de base et un mobile ;
- la figure 3 est un organigramme du procédé conforme à la présente invention, dans un mode particulier de réalisation ;
- la figure 4 illustre un mode de sélection de M antennes parmi N dans un mode particulier de réalisation de l'invention où le réseau d'antennes présente une géométrie circulaire ;
- la figure 5 représente schématiquement des dispositifs classiques de réception et d'émission multicapteurs, dans le cas où la station de base traite L communications simultanées ; et
- la figure 6 représente schématiquement des dispositifs de réception et d'émission compris dans une station de base conforme à un mode particulier de réalisation de la présente invention, dans le cas où la station de base traite L communications simultanées.

On décrira d'abord la présente invention en considérant une communication unique entre une station de base et un mobile donné.

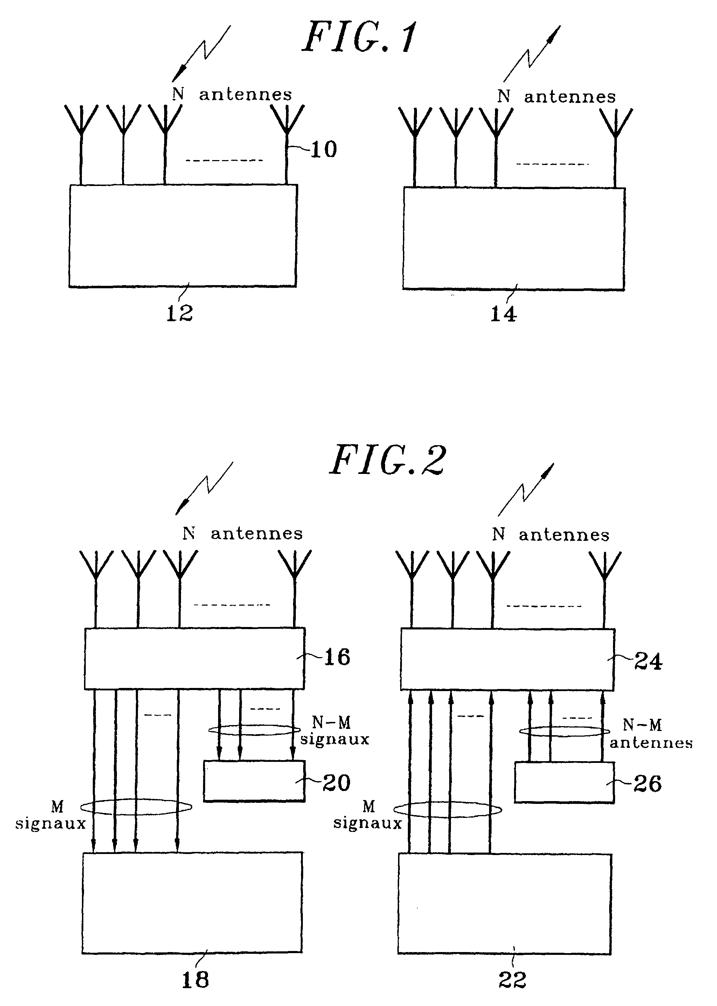

Dans la situation classique représentée sur la figure 1, que ce soit en réception (partie gauche de la figure) ou en émission (partie droite de la figure), le nombre N d'antennes, désignées chacune sur la figure par la référence 10, de la station de base correspond au nombre de signaux que sont capables de traiter (en réception) ou de synthétiser (en émission) un dispositif de réception multicapteur 12 ou un dispositif d'émission multicapteur 14 compris dans la station de base.

Typiquement, ces dispositifs comportent le même nombre de chaînes de réception ou d'émission qu'il y a d'antennes élémentaires dans le réseau, soit N dans l'exemple illustré.

On rappelle que chaque chaîne de réception comprend essentiellement un module de préamplification, un module de conversion de fréquence pour le passage en fréquence intermédiaire ou en bande de base, et un module de conversion analogique-numérique. Chaque chaîne d'émission comprend essentiellement un module de conversion numérique-analogique, un module de conversion de fréquence pour passer à la fréquence porteuse d'émission, et un module d'amplification.

La partie gauche de la figure 2 représente un dispositif de réception compris dans une station de base à N antennes conforme à un mode de réalisation de la présente invention.

Lorsqu'un mobile émet un signal en direction de la station de base, la station de base met en oeuvre un module d'estimation des directions d'arrivée et des puissances des trajets radioélectriques à la station de base (non représenté sur la figure 2). Un procédé classique de localisation de source est alors mis en oeuvre, par exemple du type de ceux décrits dans les documents suivants : ANDERSON S., MILLNERT M., VIBERG M., WAHLBERG B., "An adaptive array for mobile communication systems", IEEE Transactions on Vehicular Technology, Vol. 40, No. 1, February 1991, pages 230-236 ; VIBERG M., OTTERSTEN B., "Sensor array processing based on subspace fitting", IEEE Transactions on Signal Processing, Vol. 39, No. 5, May 1991, pages 1110-1121 ; SCHMIDT R.O., "A signal subspace approach to multiple emitter location and spectral estimation", Ph.D. dissertation, Standford Univ., Stanford, CA, Nov. 1981 ; ROY R.H., PAULRAJ A., KAILATH T., "ESPRIT - A subspace rotation approach to estimation of parameters of cisoids in noise", IEEE Trans. Acoust., Speech, Signal Processing, vol. ASSP-34, No. 4, pages 1340-1342, Oct. 1986.

Ensuite, la station de base détermine, pour ce mobile, une direction d'arrivée dite principale. Les signaux émis par le mobile vers la station de base subissent en effet des réflexions sur divers obstacles et donnent naissance à des trajets multiples. La direction d'arrivée principale peut être celle pour laquelle la puissance radioélectrique reçue par la station de base est la plus grande.

En variante, la direction d'arrivée principale peut être le barycentre r des directions d'arrivée des différents trajets radioélectriques identifiés, pondéré par un terme fonction des puissances radioélectriques de ces trajets.

Le module de détermination de la direction d'arrivée principale n'est pas représenté sur la figure 2.

Soit J le nombre de trajets radioélectriques identifiés. Soit $a_i$ l'angle formé par le $i^{ème}$ trajet radioélectrique, i étant un entier, par rapport à la direction du trajet pour lequel la puissance radioélectrique est la plus grande. Soit $p_i$ la puissance radioélectrique du $i^{ème}$ trajet. Le barycentre r est défini par

$$r = (\sum_{i=1}^{J} p_i . a_i) / (\sum_{i=1}^{J} p_i)$$

Une fois la direction d'arrivée principale déterminée, la station de base met en oeuvre un module de recherche ou sélection (non représenté) pour déterminer, parmi les N antennes du réseau, un jeu plus restreint d'antennes qui seront exploitées pour la communication considérée. Conformément à un mode de réalisation avantageux de la présente invention, le jeu utilisé en réception comprend M antennes dont les lobes individuels de réception ont des directions contenues dans un secteur angulaire d'amplitude prédéterminée centré sur la direction d'arrivée principale.

Le nombre M peut varier d'une communication à l'autre et dépend du nombre de circuits de traitement disponibles.

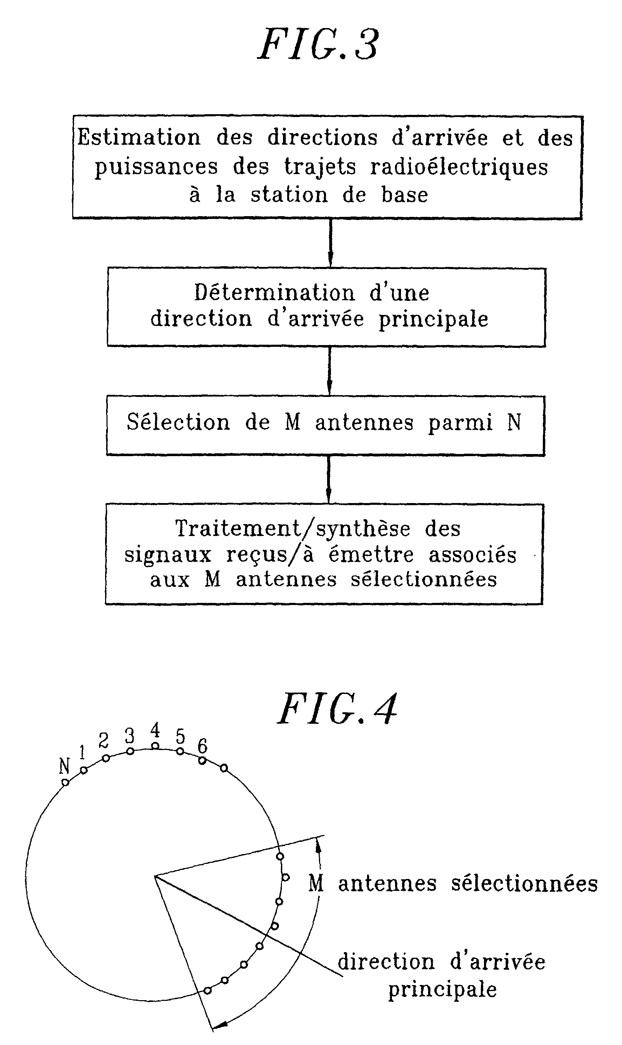

La figure 4 illustre une configuration où un secteur angulaire centré sur une direction d'arrivée principale comprend M antennes, sélectionnées parmi N, pour un réseau d'antennes à géométrie circulaire ; les N antennes élémentaires illustrées sont équiréparties sur le cercle.

Comme le montre la figure 2 (partie gauche), la station de base comprend une matrice de commutation de réception 16, qui aiguille les signaux reçus en provenance du mobile par les M antennes sélectionnées vers le dispositif de réception multicapteur 18. Les signaux non traités par le dispositif de réception multicapteur sont orientés sur une charge 20 qui correspond à l'impédance des N-M antennes non sélectionnées.

La partie droite de la figure 2 représente un dispositif d'émission compris dans une station de base à N antennes conforme à un mode particulier de réalisation de la présente invention. En émission, de façon analogue à ce qui vient d'être décrit pour la réception, la station de base comprend un module (non représenté) de recherche de M antennes dont les lobes individuels d'émission ont des directions contenues dans un secteur angulaire d'amplitude prédéterminée centré sur la direction d'arrivée principale.

La station de base comporte également un dispositif d'émission multicapteur 22, qui ne synthétise que les M signaux à émettre par les M antennes sélectionnées. Une matrice de commutation d'émission 24 aiguille les signaux synthétisés pour les appliquer à ces M antennes. Les N-M antennes non sélectionnées sont connectées à une simple charge 26 correspondant à leur impédance.

On a supposé ici que le même réseau d'antennes sert à l'émission et à la réception. On peut prévoir que les matrices de commutation de réception et d'émission sont une seule et même matrice bidirectionnelle, les signaux reçus et émis circulant en sens opposé sur les mêmes câbles. En variante, on peut prévoir un filtre duplexeur, qui sépare au niveau de chaque antenne élémentaire les signaux reçus et émis, et deux matrices de commutation distinctes fonctionnant de façon indépendante.

On notera que les matrices de commutation de réception et d'émission peuvent, selon les modes de réalisation, être soit des dispositifs matériels, soit des réalisations logicielles.

D'autre part, dans le cas particulier de l'application de l'invention à un système fonctionnant en mode d'Accès Multiple à Répartition dans le Temps (AMRT), le raisonnement précédent est effectué pour une tranche de temps donnée. En effet, le groupe de M antennes sélectionnées est susceptible de changer d'une tranche de temps à la suivante, c'est-à-dire d'une communication à l'autre.

La figure 3 reprend de façon résumée les différentes étapes du procédé conforme à la présente invention, dans un mode particulier de réalisation.

Au cours d'une première étape, on estime les directions d'arrivée et les puissances des trajets radioélectriques à la station de base. Puis on détermine, pour ce mobile, une direction d'arrivée principale. Ensuite, on sélectionne, parmi les N antennes du réseau, M antennes dont les lobes individuels de réception ou d'émission ont des directions contenues dans un secteur angulaire centré sur la direction d'arrivée principale. Enfin, on ne traite (en réception) ou on ne synthétise (en émission) que les signaux reçus ou à émettre par les M antennes sélectionnées.

La description faite plus haut en relation avec les figures 1 et 2 concerne une communication donnée entre la station de base et un mobile unique. En pratique, une station de base dessert de nombreuses communications simultanées avec plusieurs mobiles. En mode AMRT, les signaux des différentes communications occupent des tranches de temps différentes et homologues dans des cycles successifs. On considère dans ce qui suit L communications simultanées. Le nombre L représente le nombre de communications réellement simultanées, c'est-à-dire, par exemple, partageant le même cycle de tranches de temps en mode AMRT.

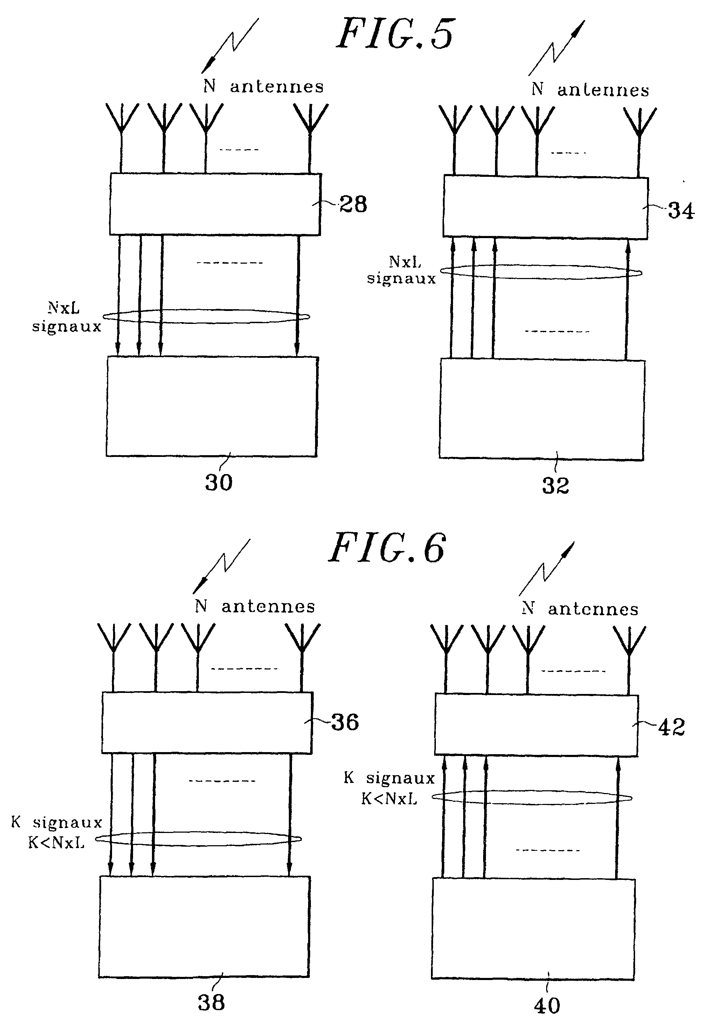

En réception, dans un dispositif classique tel que celui représenté sur la partie gauche de la figure 5, les signaux reçus par les N antennes sont traités par N chaînes de réception 28 qui séparent, pour chaque antenne, les signaux correspondant à chacune des L communications. Les NxL signaux résultants sont ensuite reçus par un dispositif de réception multicapteur 30, qui traite, pour chaque communication, les N signaux reçus.

En émission (partie droite de la figure 5), dans un dispositif classique, un dispositif d'émission multicapteur 32 synthétise, pour chaque communication, N signaux à émettre par les N antennes du réseau. Les NxL signaux résultants sont transmis à N chaînes d'émission 34, qui additionnent les contributions de chacune des communications à émettre par chaque antenne. Toutes les communications exploitent donc toutes les antennes, aussi bien en réception qu'en émission.

Lorsque la présente invention est mise en oeuvre en réception (partie gauche de la figure 6), pour chacune des L communications simultanées, les M antennes utilisées sont sélectionnées de la façon décrite plus haut dans le cas d'une communication unique. Puis M chaînes de réception 36 séparent, pour chacune des M antennes sélectionnées, les signaux des communications ayant sélectionné cette antenne. Un dispositif de réception multicapteur 38 traite alors, pour chaque communication, M signaux reçus.

Lorsque la présente invention est mise en oeuvre en émission (partie droite de la figure 6), pour chacune des L communications simultanées, les M antennes utilisées par une des L communications sont sélectionnées de la façon décrite plus haut dans le cas d'une communication unique. Un dispositif d'émission multicapteur 40 synthétise, pour chaque communication, M signaux à émettre par les M antennes sélectionnées. Les signaux résultants sont transmis à des chaînes d'émission 42, qui additionnent, pour chaque antenne, les contributions des communications ayant sélectionné cette antenne. Chaque communication n'exploite donc qu'une partie des antennes, ce qui réduit considérablement la complexité des traitements : en réception, ces traitements exploitent, pour chaque communication, M signaux reçus au lieu de N, et en émission, pour chaque communication, M signaux sont synthétisés au lieu de N.

Si la station de base comporte un nombre total K de chaînes d'émission-réception, K étant un entier inférieur à NxL, le nombre maximal de signaux issus des chaînes de réception 36 ou du dispositif d'émission multicapteur 40 est égal à K.

Suivant le cas, on peut avoir intérêt à choisir :

- soit de fixer M, et de prévoir un nombre K de chaînes égal à MxL,
- soit d'autoriser M à varier, et de considérer l'ensemble des chaînes d'émission-réception comme un groupe ou pool que l'on affecte à chaque communication en fonction de la disponibilité de chaque chaîne (donc en fonction du nombre de communications simultanées à assurer).

Au cas où les directions d'arrivée principales associées à plusieurs mobiles correspondent à des groupes d'antennes compris dans des secteurs angulaires qui se chevauchent, c'est-à-dire qui ont une ou plusieurs antennes en commun, il peut exister entre ces communications un conflit d'utilisation des mêmes chaînes d'émission-réception. On convient d'affecter à ces antennes seulement certaines des communications en conflit, suivant un critère prédéterminé. Ce critère peut consister, à titre d'exemple non limitatif, à équilibrer les puissances radioélectriques reçues, en affectant ces antennes à la communication pour laquelle la puissance reçue est la plus faible.

Des expériences ont montré qu'il était possible d'atteindre des performances semblables à celles obtenues avec le réseau complet en n'exploitant que moins de la moitié des antennes élémentaires constituant le réseau.

Un autre avantage de la présente invention est qu'elle permet, à un coût réduit, et continûment, de faire exécuter par la station de base la totalité du traitement spatial, à la différence des stations de base classiques, comportant des réseaux d'antennes sectorielles, qui superposent deux traitements spatiaux, à savoir, celui du réseau d'antennes et celui de la sectorisation.

**Revendications**

1. Procédé de communication entre une station de base comportant un réseau de N antennes distinctes, N étant un entier supérieur à 1, et au moins un mobile, **caractérisé en ce que** :

(a) on estime les directions d'arrivée et les puissances des trajets radioélectriques à la station de base ;

(b) on détermine, pour ce mobile, une direction d'arrivée principale desdits trajets radioélectriques à la station de base ;

(c) on sélectionne M antennes, M étant un entier strictement supérieur à 1 et inférieur à N, dont les lobes individuels de réception et les lobes individuels d'émission ont des directions contenues dans un secteur angulaire centré sur la direction d'arrivée principale ;

(d) on traite uniquement les signaux reçus par les M antennes sélectionnées en provenance du mobile et on synthétise uniquement les signaux à émettre par les M antennes sélectionnées.

**2.** Procédé selon la revendication 1, **caractérisé en ce qu'**on choisit pour direction d'arrivée principale la direction d'arrivée pour laquelle la puissance radioélectrique reçue est la plus grande.

**3.** Procédé selon la revendication 1, **caractérisé en ce qu'**on choisit pour direction d'arrivée principale la direction d'arrivée pour laquelle la puissance radioélectrique émise et parvenant au mobile est la plus grande.

**4.** Procédé selon la revendication 1, **caractérisé en ce qu'**on choisit pour direction d'arrivée principale le barycentre r des directions d'arrivée des différents trajets radioélectriques, défini comme suit :

$$r = \left( \sum_{i=1}^{J} p_i \cdot a_i \right) \Big/ \left( \sum_{i=1}^{J} p_i \right)$$

où i est un entier,
où J est le nombre de trajets radioélectriques identifiés,
où $a_i$ est l'angle formé par le $i^{ème}$ trajet radioélectrique par rapport à la direction du trajet ayant la plus grande puissance radioélectrique, et
où $p_i$ est la puissance radioélectrique du $i^{ème}$ trajet.

**5.** Station de base de radiocommunication avec des mobiles, comportant un réseau de N antennes distinctes, N étant un entier supérieur à 1, et K chaînes de réception ou d'émission, K étant un entier inférieur à NxL, où L est le nombre de communications simultanées, **caractérisée en ce qu'**elle comprend :

des moyens d'estimation des directions d'arrivée et des puissances des trajets radioélectriques à la station de base ;
des moyens pour déterminer, pour un mobile donné, une direction d'arrivée principale des trajets radioélectriques à la station de base ;
des moyens de sélection de M antennes, M étant un entier strictement supérieur à 1 et inférieur à N, dont les lobes individuels de réception et d'émission ont des directions contenues dans un secteur angulaire centré sur la direction d'arrivée principale ;
des moyens de commutation affectant, pour chaque communication, M chaînes de réception et d'émission aux M antennes précédemment sélectionnées.

**6.** Station de base selon la revendication 5, **caractérisée en ce que** la direction d'arrivée principale est la direction d'arrivée pour laquelle la puissance radioélectrique reçue, ou émise et parvenant au mobile, est la plus grande.

**7.** Station de base selon la revendication 5, **caractérisée en ce que** la direction d'arrivée principale est le barycentre r des directions d'arrivée des différents trajets radioélectriques, défini comme suit :

$$r = \left( \sum_{i=1}^{J} p_i \cdot a_i \right) \Big/ \left( \sum_{i=1}^{J} p_i \right)$$

où i est un entier,
où J est le nombre de trajets radioélectriques identifiés,
où $a_i$ est l'angle formé par le $i^{ème}$ trajet radioélectrique par rapport à la direction du trajet ayant la plus grande puissance radioélectrique, et
où $p_i$ est la puissance radioélectrique du $i^{ème}$ trajet.

**Claims**

**1.** Communication process between a base station with a network of N distinct antennas, where N is an integer number greater than 1, and at least one mobile, **characterized in that**:

(a) the directions of arrival and the powers of radioelectric paths are estimated at the base station;

(b) for this mobile, a main direction of arrival at the base station is determined for the said radioelectric paths;

(c) M antennas are selected, where M is an integer number greater than 1 and less than N, in which the individual reception lobes and the individual transmission lobes are in directions contained within an angular sector centred on the main direction of arrival;

(d) only the signals received by the M selected antennas from the mobile are processed, and only the signals to be sent by the M selected antennas are synthesized.

2. Process according to claim 1, **characterized in that** the direction of arrival for which the received radioelectric power is highest, is selected as the main direction of arrival.

3. Process according to claim 1, **characterized in that** the direction of arrival for which the transmitted radioelectric power reaching the mobile is highest, is selected as the main direction of arrival.

4. Process according to claim 1, **characterized in that** the main direction of arrival is selected as being the centre of gravity r of the directions of arrival of the different radioelectric paths, as follows:

$$r = \left( \sum_{i=1}^{J} p_i \cdot a_i \right) \Big/ \left( \sum_{i=1}^{J} p_i \right)$$

where i is an integer,
where J is the number of identified radioelectric paths,
where $a_i$ is the angle formed between the $i^{th}$ radioelectric path and the direction of the path with the greatest radioelectric power, and
where $p_i$ is the radioelectric power of the $i^{th}$ path.

5. Base station for radiocommunication with mobiles, comprising a network of N distinct antennas, where N is an integer greater than 1, and K reception or transmission sets where K is an integer less than NxL, where L is the number of simultaneous communications, **characterized in that** it comprises:

means of estimating directions of arrival and powers of radioelectric paths at the base station;
means of determining a main direction of arrival for radioelectric paths at the base station, for a given mobile;
means of selecting M antennas, where M is an integer strictly greater than 1 and less than N, in which the individual reception and transmission lobes are along directions contained within an angular sector centred on the main direction of arrival;
switching means, assigning M reception and transmission sets to the previously selected M antennas, for each communication.

6. Base station according to claim 5, **characterized in that** the main direction of arrival is the direction of arrival for which the received or transmitted radioelectric power reaching the mobile is the greatest.

7. Base station according to claim 5, **characterized in that** the main direction of arrival is the centre of gravity r of the directions of arrival of the different radioelectric paths, defined as follows:

$$r = \left( \sum_{i=1}^{J} p_i \cdot a_i \right) \Big/ \left( \sum_{i=1}^{J} p_i \right)$$

where i is an integer,
where J is the number of identified radioelectric paths,
where $a_i$ is the angle formed between the $i^{th}$ radioelectric path and the direction of the path with the greatest radioelectric power, and
where $p_i$ is the radioelectric power of the $i^{th}$ path.

**Patentansprüche**

1. Verfahren zur Kommunikation zwischen einer Basisstatlon, die ein Netz von N einzelnen Antennen aufweist, wobei N eine ganze Zahl größer als 1 ist, und wenigstens einem Mobiltelefon, **dadurch gekennzeichnet, daß**:

(a) man die Einfallsrichtungen und die Leistungen der Funkstrecken an der Basisstation schätzt,
(b) man für das Mobiltelefon eine Haupteinfallsrichtung der genannten Funkstrecken an der Basisstation bestimmt,
(c) man M Antennen auswählt, wobei M eine ganze Zahl echt größer als 1 und kleiner als N ist, deren einzelne Empfangskeulen und einzelne Sendekeulen Richtungen haben, die in einem auf die Haupteinfallsrichtung zentrierten Winkelsektor enthalten sind,
(d) man einzig die vom Mobiltelefon stammenden Signale verarbeitet, die von den M ausgewählten Antennen empfangen werden, und einzig die Signale synthetisiert, die von den M ausgewählten Antennen zu emittieren sind.

**2.** Verfahren nach Anspruch 1, **dadurch gekennzeichnet, daß** man als Haupteinfallsrichtung die Einfallsrichtung auswählt, für welche die empfangene radioelektrische Leistung am größten ist.

**3.** Verfahren nach Anspruch 1, **dadurch gekennzeichnet, daß** man als Haupteinfallsrichtung die Einfallsrichtung auswählt, für welche die emittierte und am Mobiltelefon eintreffende radioelektrische Leistung am größten ist.

**4.** Verfahren nach Anspruch 1, **dadurch gekennzeichnet, daß** man als Haupteinfallsrichtung das gewichtete Mittel der Einfallsrichtungen der verschiedenen Funkstrecken wählt, das wie folgt definiert ist:

$$r = \left( \sum_{i=1}^{J} p_i \cdot a_i \right) / \left( \sum_{i=1}^{J} p_i \right)$$

wobei i eine ganze Zahl ist.
J die Anzahl der identifizierten Funkstrecken ist,
$a_i$ der Winkel zwischen der i-ten Funkstrecke und der Richtung der Funkstrecke ist, die die größte radioelektrische Leistung hat, und
$p_i$ die radioelektrische Leistung der i-ten Funkstrecke ist.

**5.** Basisstation zur Radiokommunikation mit Mobiltelefonen, mit einem Netz von N einzelnen Antennen, wobei N eine ganze Zahl größer als 1 ist, und K Sende- oder Empfangsketten, wobei K eine ganze Zahl kleiner als NxL ist, wobei L die Anzahl der simultanen Kommunikationen ist, **dadurch gekennzeichnet, daß** sie aufweist:

Mittel zur Schätzung der Einfallsrichtungen und Leistungen der Funkstrekken an der Basisstation,
Mittel zur Bestimmung, für ein gegebenen Mobiltelefon, einer Haupteinfallsrichtung der Funkstrecken an der Basisstation,
Mittel zur Auswahl von M Antennen, wobei M eine ganze Zahl echt größer als 1 und kleiner als M ist, deren einzelne Empfangskeulen und Sendekeulen Richtungen haben, die in einem auf die Haupteinfallsrichtung zentrierten Winkelsektor enthalten sind,
Schaltmittel, die für jede Kommunikation den M zuvor ausgewählten Antennen M Empfangs- und Sendeketten zuweisen.

**6.** Basisstation nach Anspruch 5, **dadurch gekennzeichnet, daß** die Haupteinfallsrichtung die Einfallsrichtung ist, für welche die empfangene oder emittierte und am Mobiltelefon eintreffende radioelektrische Leistung am größten ist.

**7.** Basisstation nach Anspruch 5, **dadurch gekennzeichnet, daß** die Haupteinfallsrichtung das gewichtete Mittel der Einfallsrichtungen der verschiedenen Funkstrecken ist, das wie folgt definiert ist:

$$r = \left( \sum_{i=1}^{J} p_i \cdot a_i \right) / \left( \sum_{i=1}^{J} p_i \right)$$

wobei i eine ganze Zahl ist,
J die Anzahl der identifizierten Funkstrecken ist,
$a_i$ der Winkel zwischen der i-ten Funkstrecke und der Richtung der Funkstrecke ist, die die größte radioelektrische Leistung hat, und
$p_i$ die radioelektrische Leistung der i-ten Funkstrecke ist.

# *FIG.1*

N antennes

~10

‾‾‾‾‾‾‾‾

12

N antennes

# *FIG.2*

N antennes

N antennes

~16

~24

N—M
signaux

N—M
antennes

~20

~26

M
signaux

M
signaux

18

22

## FIG.3

```
┌─────────────────────────────────────────────┐
│  Estimation des directions d'arrivée et des  │
│  puissances des trajets radioélectriques     │
│        à la station de base                  │
└─────────────────────────────────────────────┘
                      │
                      ▼
        ┌───────────────────────────────┐
        │   Détermination d'une         │
        │  direction d'arrivée principale│
        └───────────────────────────────┘
                      │
                      ▼
        ┌───────────────────────────────┐
        │  Sélection de M antennes parmi N │
        └───────────────────────────────┘
                      │
                      ▼
        ┌───────────────────────────────┐
        │   Traitement/synthèse des     │
        │ signaux reçus/à émettre associés │
        │   aux M antennes sélectionnées │
        └───────────────────────────────┘
```

## FIG.4

M antennes sélectionnées

direction d'arrivée principale

## *FIG.5*

N antennes

28

NxL
signaux

30

N antennes

34

NxL
signaux

32

## *FIG.6*

N antennes

36

K signaux
K<NxL

38

N antennes

42

K signaux
K<NxL

40